# EUROPEAN PATENT APPLICATION

(11) **EP 4 362 491 A1**
(43) Date of publication of application: **01.05.2024**
(21) Application number: 22828224.0
(22) Date of filing: 08.06.2022
(51) Int. Cl.: H04Q 9/00, F24F 11/54

(54) **INTERLOCK CONTROL METHOD, PROGRAM, DEVICE, AND SYSTEM**

(30) Priority: 22.06.2021 JP 2021103119
(71) Applicant: DAIKIN INDUSTRIES, LTD., Osaka-Shi, Osaka 530-0001 (JP)
(72) Inventor: TAKAKI, Kentaro, Osaka-shi, Osaka 530-8323 (JP); OKADA, Nao, Osaka-shi, Osaka 530-8323 (JP)
(74) Representative: Hoffmann Eitle
(86) International application number: PCT/JP2022/023074
(87) International publication number: WO 2022/270307

(57) **Abstract**

Functions of two or more devices are caused to effectively collaborate with each other. A method executed by a control unit of a collaboration control apparatus, the method including a step of selecting two or more devices from among a plurality of devices; and a step of giving an instruction to the selected devices to implement collaboration control relating to functions of the devices.

## Description

### Technical Field

The present disclosure relates to a collaboration control method, a program, an apparatus, and a system.

### Background Art

Conventionally, as a method for controlling a plurality of devices, it has been known to control the devices according to the situation of a person using the devices. For example, in Patent Document 1, it is disclosed to control a device such as an air conditioner according to a scenario such as waking up or going to bed.

### Citation List

### Patent Document

Patent document 1: Japanese Patent No. 6765071 Publication

### Summary of Invention

### Technical Problem

However, in the conventional method, the device is only controlled according to the situation of the person who uses the device, and each function of the plurality of devices cannot be controlled effectively. The purpose of the present disclosure is to cause the functions of two or more devices to collaborate effectively.

### Solution to Problem

A method according to a first aspect of the present disclosure is a method executed by a control unit of a collaboration control apparatus, the method including:
a step of selecting two or more devices from among a plurality of devices; and
a step of giving an instruction to the selected devices to implement collaboration control relating to functions of the devices.

According to the first aspect of the present disclosure, two or more devices can collaborate with each other to improve the effect of the functions of the devices.

A method according to a second aspect of the present disclosure is the method according to the first aspect, wherein the collaboration control causes the selected devices to collaborate with each other to increase an effect of the functions.

According to the second aspect of the present disclosure, by causing two or more devices to collaborate with each other, the effect of the function of the device can be increased.

A method according to a third aspect of the present disclosure is the method according to the first aspect or the second aspect, further including:
a step of selecting a plurality of the functions, wherein
the instruction is to instruct the selected devices to implement the collaboration control relating to the plurality of the functions of the devices.

According to a third aspect of the present disclosure, the effect of the plurality of functions of the devices can be improved by causing two or more devices to collaborate with each other.

A method according to a fourth aspect of the present disclosure is the method according to any one of the first to third aspects, further including:
a step of referring to a storage unit storing an operation content of each of the devices for every instance of the collaboration control relating to one or more of the functions.

According to the fourth aspect of the present disclosure, it is possible to instruct the operation contents of each device which have been predetermined.

A method according to a fifth aspect of the present disclosure is the method according to any one of the first to fourth aspects, further including:
a step of referring to a storage unit storing the function of each of the devices, and
the collaboration control relates to the functions of the selected devices.

According to the fifth aspect of the present disclosure, the devices can collaborate with each other according to the functions of the devices.

A method according to a sixth aspect of the present disclosure is the method according to any one of the first to fifth aspects, further including:
a step of displaying the functions of the selected devices in a selectable manner.

According to a sixth aspect of the present disclosure, the user can select a plurality of functions corresponding to the device selected by the user.

A method according to a seventh aspect of the present disclosure is the method according to any one of the first to sixth aspects, further including: a step of displaying a screen for selecting a plurality of functions from the functions of the selected devices.

According to a seventh aspect of the present disclosure, a user can select a plurality of functions according to the device selected by the user.

A method according to an eight aspect of the present disclosure is the method according to any one of the first to seventh aspects, further including:
a step of displaying a screen including an area for selecting the two or more devices from the plurality of devices and an area for selecting a plurality of the functions.

According to an eighth aspect of the present disclosure, a user can easily select two or more devices and a plurality of functions corresponding to the two or more devices.

A method according to a ninth aspect of the present disclosure is the method according to any one of the first to eighth aspects, further including:
the plurality of devices are registered to each group, wherein
the method further comprises a step of selecting the group, and
the two or more devices are selected from the plurality of devices registered in the selected group.

According to the ninth aspect of the present disclosure, the user can cause the devices in a group to which the devices had been registered in advance, to collaborate with each other.

A program according to a tenth aspect of the present disclosure is a program for causing a collaboration control apparatus to execute:
a procedure of selecting two or more devices from a plurality of devices; and
a procedure of giving an instruction to the selected devices to implement collaboration control relating to functions of the devices.

A collaboration control apparatus according to an eleventh aspect of the present disclosure is a collaboration control apparatus including:
a control unit, wherein
the control unit
selects two or more devices from a plurality of devices; and
gives an instruction to the selected devices to implement collaboration control relating to functions of the devices.

A system according to a twelfth aspect of the present disclosure is a system including:
a collaboration control apparatus; and
a server, wherein
a control unit of the collaboration control apparatus
selects two or more devices from a plurality of devices; and
gives an instruction to the selected devices to implement collaboration control relating to functions of the devices.

### Brief Description of Drawings

[FIG. 1] FIG. 1 is a diagram illustrating an overall configuration according to an embodiment of the present disclosure.
[FIG. 2] FIG. 2 is a diagram illustrating a hardware configuration of a collaboration control apparatus according to an embodiment of the present disclosure.
[FIG. 3] FIG. 3 is a sequence diagram of a process executed by an air conditioning system according to an embodiment of the present disclosure.
[FIG. 4] FIG. 4 is a flowchart of a process executed by a collaboration control apparatus according to an embodiment of the present disclosure.
[FIG. 5] FIG. 5 is an example of a storage unit in which the operation contents of each device are stored for each instance of collaboration control relating to one or more functions according to an embodiment of the present disclosure.
[FIG. 6] FIG. 6 is an example of a storage unit in which the functions of each device according to an embodiment of the present disclosure are stored.
[FIG. 7] FIG. 7 is an example of transition of a screen displayed on a collaboration control apparatus according to an embodiment of the present disclosure.

### Description of Embodiments

Embodiments of the present disclosure will be described below based on the drawings.

### <Explanation of terminology>

· In the present specification, "collaboration control" is control that improves the effect of the functions of two or more devices by causing the devices to collaborate with each other (for example, two or more devices are operated simultaneously). Collaboration control is also referred to as "support operation".
· In the present specification, a "device" is any device having various functions. For example, a device may be, but is not limited to, an air conditioner (for example, air conditioners for small spaces such as room air conditioners, air cleaner, ventilators, dehumidifiers, humidifiers, circulators, dressing rooms, or the like), a water heater, or the like.
· In the present specification, a "function" is a process performed by the device. For example, functions include, but are not limited to, a temperature adjustment function, a humidity adjustment function, an air cleaning function, a ventilation function, a hot water filling function, or the like.

### <System configuration>

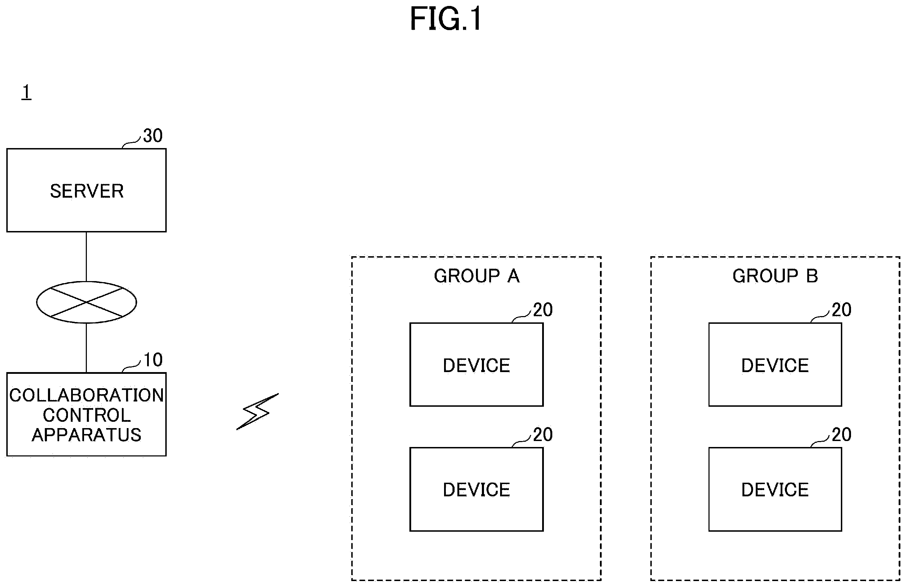

FIG. 1 is a diagram illustrating an overall configuration according to an embodiment of the present disclosure. An air conditioning system 1 (the air conditioning system 1 is an example of a system) includes a collaboration control apparatus 10, a device 20, and a server 30. Each of these elements will be described below.

### <<Collaboration control apparatus>>

The collaboration control apparatus 10 is an apparatus for controlling the collaboration of two or more devices 20. For example, the collaboration control apparatus 10 is a smartphone in which application software for operating the devices is installed, a remote controller for the devices 20, a centralized control device (a device capable of controlling a plurality of the devices 20), or the like. The collaboration control apparatus 10 can transmit and receive data to and from the devices 20 and the server 30 via any network.

Specifically, the collaboration control apparatus 10 selects two or more devices 20 from the plurality of devices 20. Further, the collaboration control apparatus 10 instructs the selected devices 20 to implement collaboration control relating to one or more functions of the devices 20. Note that one or more functions relating to collaboration control are functions that are included in any of the devices selected by the user.

### «Device»

The device 20 is any device having various functions. For example, the device may be, but is not limited to, an air conditioner (for example, air conditioners for small spaces such as room air conditioners, air cleaners, ventilators, dehumidifiers, humidifiers, circulators, dressing rooms, or the like), a water heater, or the like.

The device 20 is registered to each group (in the example of FIG. 1, groups A and B). For example, a user (user of the device 20) can register a plurality of devices 20 belonging to each group by using the collaboration control apparatus 10. For example, a group corresponds to each room (for example, a living room, a children's room, or the like) in the user's home. The devices 20 in the group can collaborate with each other.

### «Server»

The server 30 is configured by one or more computers. The server 30 may include a storage unit in which the functions of each device 20 are stored.

### <Hardware configuration>

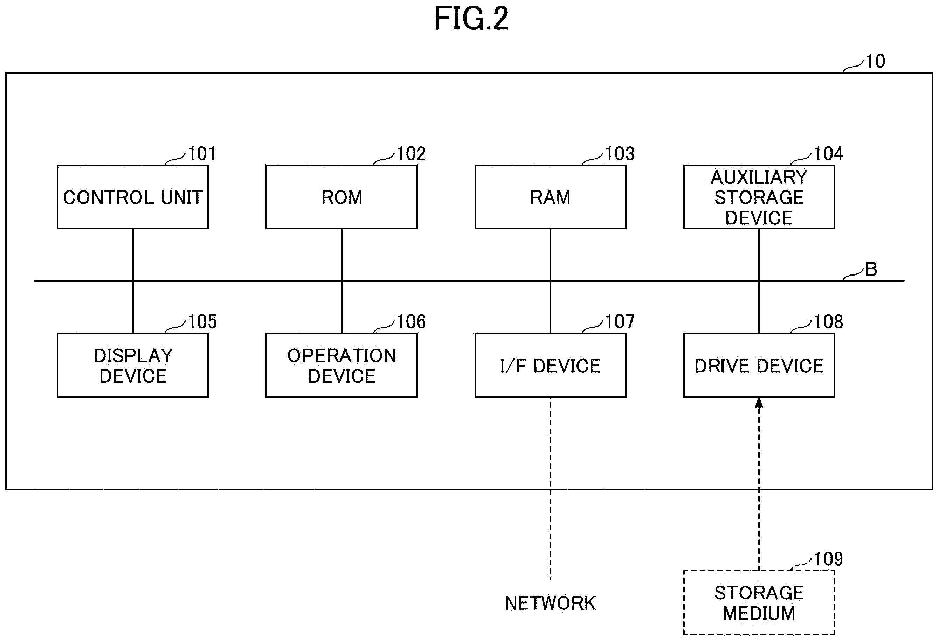

FIG. 2 is a diagram illustrating a hardware configuration of the collaboration control apparatus 10 according to an embodiment of the present disclosure. The same applies to the server 30. The collaboration control apparatus 10 includes a control unit 101, a ROM (Read Only Memory) 102, and a RAM (Random Access Memory) 103. The control unit 101, the ROM 102, and the RAM 103 form what is referred to as a computer.

The collaboration control apparatus 10 may also include an auxiliary storage device 104, a display device 105, an operation device 106, an I/F (interface) device 107, and a drive device 108. The pieces of hardware of the collaboration control apparatus 10 are interconnected via a bus B.

The control unit (for example, a CPU) 101 is a computing device that executes various programs installed in the auxiliary storage device 104. When the control unit 101 executes the programs, the processes described in the present specification are performed.

The ROM 102 is a non-volatile memory. The ROM 102 functions as a main storage device for storing various programs, data or the like, necessary for the control unit 101 to execute various programs installed in the auxiliary storage device 104. Specifically, the ROM 102 functions as a main storage device for storing a boot program such as BIOS (Basic Input/Output System) or EFI (Extensible Firmware Interface).

The RAM 103 is a volatile memory such as DRAM (Dynamic Random Access Memory) and SRAM (Static Random Access Memory). The RAM 103 functions as a main storage device that provides a work area to which the various types of programs stored in the auxiliary storage unit 104 are loaded when the programs are executed by the control unit 101.

The auxiliary storage device 104 is an auxiliary storage device that stores various programs and information used when various programs are executed.

The display device 105 is a display device that displays the internal state or the like of the collaboration control apparatus 10.

The operation device 106 is an input device in which an operator of the collaboration control apparatus 10 inputs various instructions to the collaboration control apparatus 10.

The I/F device 107 is a communication device for connecting to a network to communicate with other devices.

The drive device 108 is a device for setting a storage medium 109. The storage medium 109 includes a medium for recording information optically, electrically, or magnetically, such as a CD-ROM, a flexible disk, a magneto-optical disk, or the like. The storage medium 109 may include a semiconductor memory or the like for recording information electrically, such as a ROM, a flash memory, or the like.

Various programs to be installed in the auxiliary storage device 104 are installed, for example, when the distributed storage medium 109 is set in the drive device 108 and various programs recorded in the storage medium 109 are read out by the drive device 108. Alternatively, various programs to be installed in the auxiliary storage device 104 may be installed by being downloaded from the network via the I/F device 107.

### <Processing method>

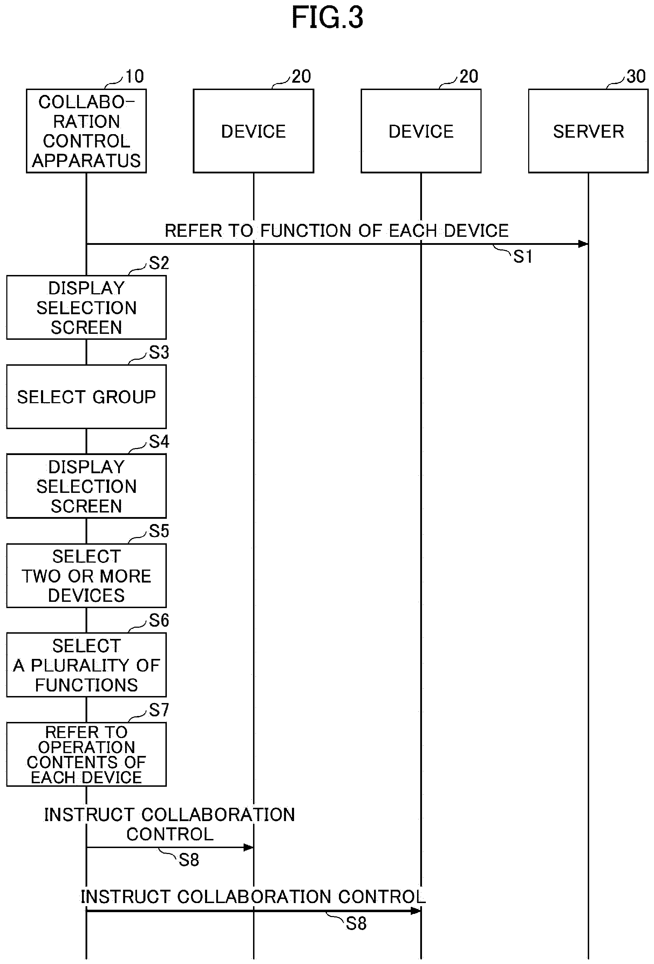

FIG. 3 is a sequence diagram of processing executed by the air conditioning system 1 according to an embodiment of the present disclosure.

In step 1 (S1), the collaboration control apparatus 10 queries the server 30 about the function of each device 20. Specifically, the collaboration control apparatus 10 refers to the storage unit of the server 30 in which the function of each device is stored. With reference to FIG. 3, an example in which the server 30 has a storage unit in which the function of each device is stored will be described, but the collaboration control apparatus 10 may have a storage unit in which the function of each device is stored. Step 1 may be executed after step 2, after step 3, or after step 5.

### [Function]

The function will now be described. The "function " is a process executed by the device 20. For example, the function includes, but is not limited to, a temperature adjustment function, a humidity adjustment function, an air cleaning function, a ventilation function, and a hot water filling function.

In step 2 (S2), the collaboration control apparatus 10 displays a screen for selecting a group.

### [Group]

The following describes groups. The devices 20 are registered in each group. For example, a user (a user of the device 20) can register a plurality of devices 20 belonging to each group by using the collaboration control apparatus 10. For example, the group is each room in the user's home (for example, the living room, the children's room, etc.), and the device 20 such as a room air conditioner and an air cleaner can be registered to the group referred to as a living room.

In step 3 (S3), the collaboration control apparatus 10 receives a selection of a group that was input by the user on the screen in S2.

In step 4 (S4), the collaboration control apparatus 10 displays a screen including an area for selecting two or more devices from a plurality of devices registered in the group selected in S3 and an area for selecting a plurality of functions.

In one embodiment of the present disclosure, the collaboration control apparatus 10 displays a screen for selecting a group, and then can display a plurality of devices registered in the group selected by the user (then, a selection of two or more devices is received from the user). In another embodiment of the present disclosure, the collaboration control apparatus 10 displays a plurality of devices registered in each of all groups, and can receive a selection of two or more devices registered in the same group from the user.

In step 5 (S5), the collaboration control apparatus 10 receives a selection of two or more devices input by the user in the screen in S4.

In step 6 (S6), the collaboration control apparatus 10 receives a selection of one or more functions input by the user on the screen in S4. In the area for selecting the plurality of functions, the functions of one of the devices selected by the user are displayed in a selectable manner.

In step 7 (S7), the collaboration control apparatus 10 refers to the operation contents of each device. Specifically, the collaboration control apparatus 10 refers to a storage unit of the collaboration control apparatus 10 in which the operation contents of each device are stored for every instance of collaboration control relating to one or more functions. Although FIG. 3 describes an example in which the collaboration control apparatus 10 includes a storage unit in which the operation contents of each device are stored for every instance of collaboration control relating to one or more functions, the server 30 may include a storage unit in which the operation contents of each device are stored for every instance of collaboration control relating to one or more functions.

In step 8 (S8), the collaboration control apparatus 10 instructs the two or more devices selected in S5 to implement collaboration control. Specifically, the collaboration control apparatus 10 gives an instruction to two or more devices selected in S5 to perform the operation of each device referred to in S7. The instruction of the operation to each device may be transmitted from the collaboration control apparatus 10 to the device 20 via the server 30, or may be transmitted directly from the collaboration control apparatus 10 to the device 20. Thereafter, each device operates in accordance with the instruction.

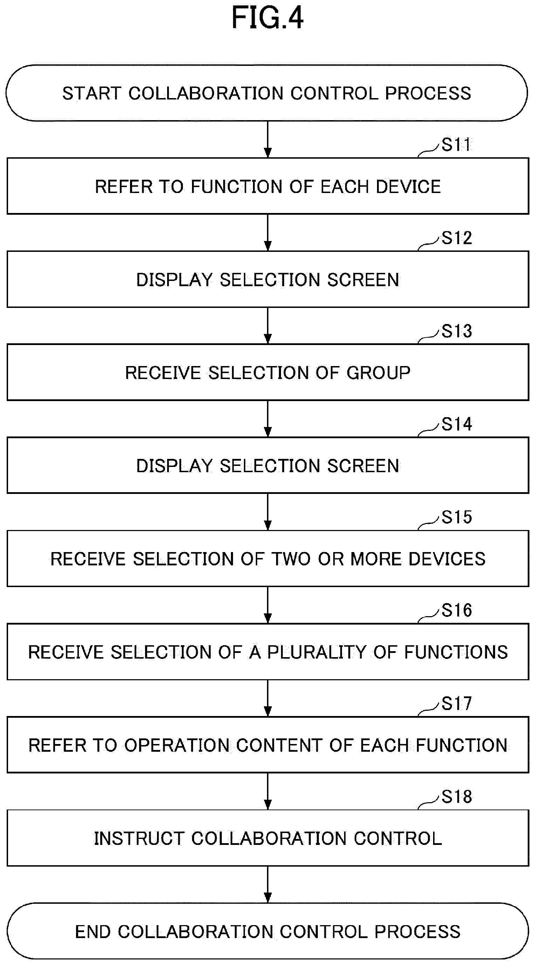

FIG. 4 is a flowchart of a process executed by the collaboration control apparatus 10 according to an embodiment of the present disclosure.

In step 11 (S11), the control unit 101 of the collaboration control apparatus 10 refers to a storage unit in which the functions of each device are stored.

In step 12 (S12), the control unit 101 of the collaboration control apparatus 10 displays a screen for selecting a group.

In step 13 (S13), the control unit 101 of the collaboration control apparatus 10 receives a selection of the group that was input by the user in the screen in S12.

In step 14 (S14), the control unit 101 of the collaboration control apparatus 10 displays a screen including an area for selecting two or more devices from a plurality of devices registered in the group selected in S13 and an area for selecting a plurality of functions.

In step 15 (S15), the control unit 101 of the collaboration control apparatus 10 receives a selection of two or more devices input by the user in the screen in S14.

In step 16 (S16), the control unit 101 of the collaboration control apparatus 10 receives a selection of one or more functions input by the user in the screen in S14 based on the functions included in each device referenced in S11. In the area for selecting the plurality of functions, the functions included in any of the devices selected by the user are selectably displayed.

In step 17 (S17), the control unit 101 of the collaboration control apparatus 10 refers to a storage unit in which the operation contents of each device are stored for every instance of collaboration control relating to one or more functions.

In step 18 (S18), the collaboration control apparatus 10 instructs the two or more devices selected in S15 to implement collaboration control. Specifically, the control unit 101 of the collaboration control apparatus 10 gives an instruction to two or more devices selected in S15 to perform the operation of each device referred to in S17. The instruction of the operation to each device may be transmitted from the collaboration control apparatus 10 to the device 20 via the server 30, or may be transmitted directly from the collaboration control apparatus 10 to the device 20. Thereafter, each device operates in accordance with the instruction.

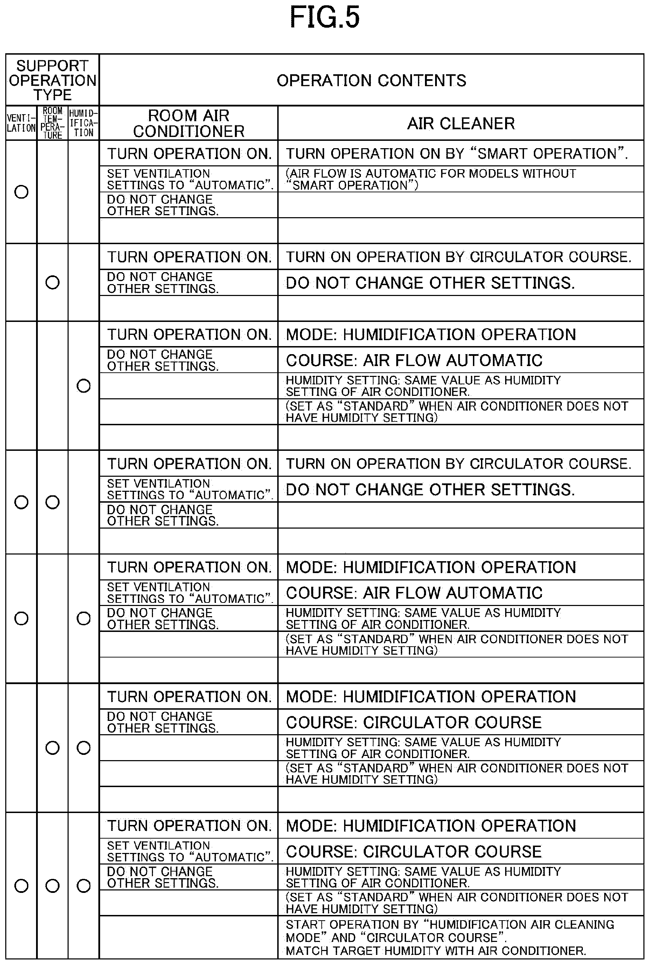

FIG. 5 illustrates an example of a storage unit in which the operation contents of each device are stored for every instance of collaboration control relating to one or more functions according to an embodiment of the present disclosure. For example, the collaboration control apparatus 10 includes a storage unit in which the operation contents of each device are stored for every instance of collaboration control relating to one or more functions.

In a storage unit in which the operation contents of each device are stored for every instance of collaboration control relating to one or more functions, the operation contents (in the case of the example illustrated in FIG. 5, the operation contents of the "room air conditioner" and the operation contents of the "air cleaner") of each device (in the example illustrated in FIG. 5, "room air conditioner" and "air cleaner") are stored for every instance of collaboration control relating to one or more functions (in the example illustrated in FIG. 5, one or more of "ventilation function", "temperature adjustment function (room temperature)", and "humidity adjustment function (humidification)" of "support operation type") .

For example, when the ventilation function (an example of one function) is selected as the support operation, the room air conditioner is operated as "Turn operation on. Set ventilation settings to "automatic". Do not change other settings." and the air cleaner is operated as "Turn operation on by "smart operation". (Air flow is automatic for models without "smart operation".)". When the ventilation function and the room temperature adjustment function (an example of multiple functions) are selected as the support operation, the room air conditioner is operated as "Turn operation on. Set ventilation settings to "automatic". Do not change other settings." and the air cleaner is operated as "Turn on operation by circulator course. Do not change other settings".

Thus, by causing multiple devices to collaborate with each other, for example, in the ventilation support operation, the room air conditioner and the air cleaner operate to reduce the stagnation of air in the entire room during ventilation, so that the entire room can be ventilated. In the room temperature support operation, for example, the room air conditioner and the air cleaner operate to reach the target set temperature faster than when the room air conditioner operates alone. In the ventilation support operation, the target humidity setting can be reached as quickly as in the room temperature support operation.

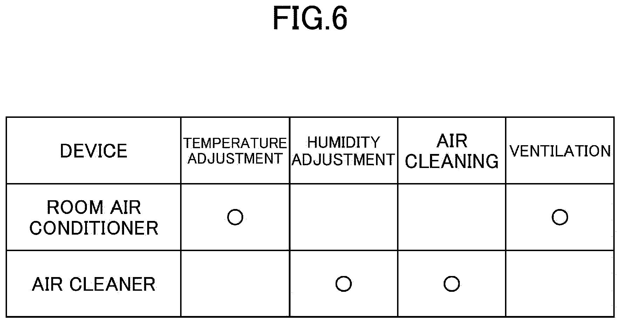

FIG. 6 is an example of a storage unit in which the functions of each device according to an embodiment of the present disclosure are stored. For example, the server 30 includes a storage unit in which the functions of each device are stored.

In a storage unit in which the functions of each device are stored, for each device (in the example illustrated in FIG. 6, "room air conditioner" and "air cleaner"), information of the functions of each device is stored (in the example of FIG. 6, the "room air conditioner" has functions of "temperature adjustment" and "ventilation", and the "air cleaner" has functions of "humidity adjustment" and "air cleaning").

In FIG. 6, temperature adjustment and ventilation are exemplified as the functions of a room air conditioner, but the room air conditioner may have a humidity adjustment function and an air cleaning function. Moreover, the functions may be stored according to the model of the device (that is, the same device may store different functions depending on the model). For example, it may be stored that a first room air conditioner has temperature adjustment and ventilation functions and a second room air conditioner has temperature adjustment and humidity adjustment functions according to the functions of each model of the room air conditioner. Functions of a ventilator, a dehumidifier, a humidifier, a circulator, etc., may also be stored.

### <Screen>

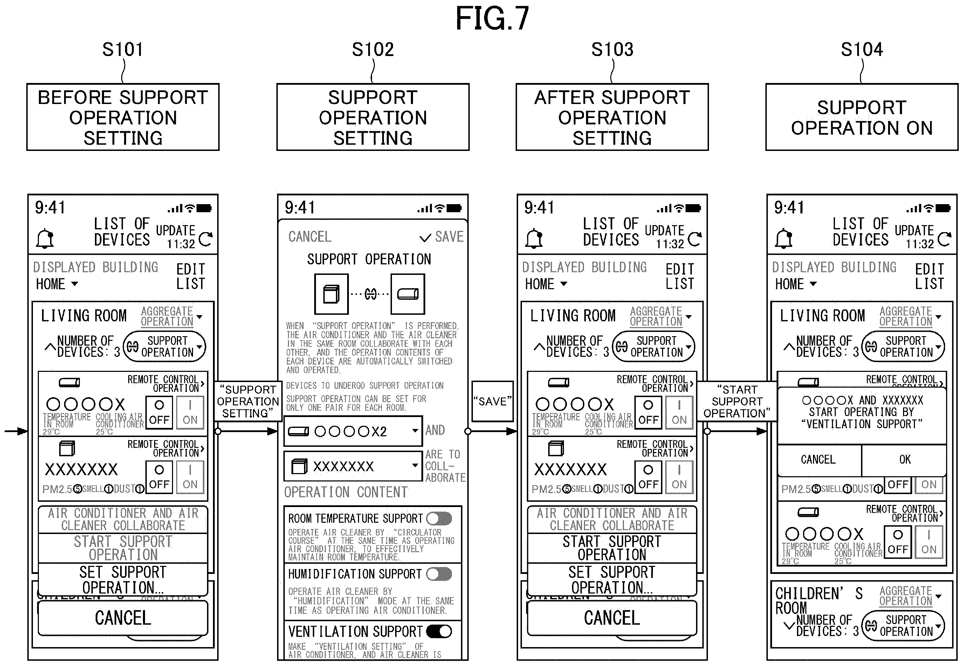

FIG. 7 illustrates an example of the transition of a screen displayed on the collaboration control apparatus 10 according to an embodiment of the present disclosure.

In step 101 (S101), a screen for instructing the start of setting the operating state of the devices registered in the living room and the collaboration control (also referred to as "support operation") of two or more devices, is displayed. When the user instructs the start of setting (for example, "support operation setting" is selected on the screen of S101 in FIG. 7.), the process proceeds to step 102.

In step 102 (S102), a screen including an area for selecting two or more devices from a plurality of devices and an area for selecting a plurality of functions is displayed. When a user selects two or more devices from a plurality of devices (for example, the devices are selected on the screen in S102 in FIG. 7), and the functions of at least one device of the selected two or more devices are selectably displayed, and the user selects at least one function from the plurality of functions (for example, ON or OFF of the functions is selected in the screen of S102 of FIG. 7) and saves the settings, the screen proceeds to step 103. The plurality of devices selected in the screen of S102 can be selected from the devices registered in the living room.

In step 103 (S103), a screen for instructing the start of collaboration control (support operation) for two or more devices is displayed. When the user instructs to start (for example, "start support operation" is selected in the screen of S103 in FIG. 7), the process proceeds to step 104.

In step 104 (S104), a screen for confirming, with the user, the start of collaboration control (support operation) of two or more devices, is displayed. When the user confirms the start (for example, "OK" is tapped on the screen of S104 in FIG. 7), collaboration control is started (that is, the setting of collaboration control (support operation) is enabled). The data of the previous operation contents stored in the device 20 is overwritten.

Thus, in one embodiment of the present disclosure, the effect (eliminate unevenness, for example) that is achieved according to one or more functions (for example, the temperature adjustment function, the humidity adjustment function, the air cleaning function, the ventilation function, and the hot water filling function) can be improved by causing two or more devices (for example, a room air conditioner, an air cleaner, etc.), selected from a plurality of devices registered in each room such as a living room and a children's room, to collaborate with each other.

For example, by causing a plurality of devices to collaborate with each other, temperature adjustment, humidity adjustment, ventilation, air cleaning, etc., in a room can be performed more evenly than when a single device performs the function. In the case of heating a room by a room air conditioner, warm air stays in the upper part of the room; however, by circulating the air in the room with an air cleaner, the unevenness can be eliminated. In the case of cooling a room by a room air conditioner, the whole room can be cooled by circulating the air in the room with an air cleaner.

Although the embodiments have been described above, it will be understood that various changes in form and details are possible without departing from the purpose and scope of the claims.

The present international application is based upon and claims priority to Japanese Patent Application No. 2021-103119 filed on June 22, 2021, the entire contents of which are incorporated herein by reference.

### Reference Signs List

1 air conditioning system
10 collaboration control apparatus
20 device
30 server
101 control unit
102 ROM
103 RAM
104 auxiliary storage device
105 display device
106 operation device
107 I/F device
108 drive device
109 storage medium

## Claims

1. A method executed by a control unit of a collaboration control apparatus, the method comprising:
a step of selecting two or more devices from among a plurality of devices; and
a step of giving an instruction to the selected devices to implement collaboration control relating to functions of the devices.

2. The method according to claim 1, wherein the collaboration control causes the selected devices to collaborate with each other to increase an effect of the functions.

3. The method according to claim 1 or 2, further comprising:
a step of selecting a plurality of the functions, wherein
the instruction is to instruct the selected devices to implement the collaboration control relating to the plurality of the functions of the devices.

4. The method according to any one of claims 1 to 3, further comprising:
a step of referring to a storage unit storing operation content of each of the devices for every instance of the collaboration control relating to one or more of the functions.

5. The method according to any one of claims 1 to 4, further comprising:
a step of referring to a storage unit storing the function of each of the devices, and
the collaboration control relates to the functions of the selected devices.

6. The method according to any one of claims 1 to 5, further comprising:
a step of displaying the functions of the selected devices in a selectable manner.

7. The method according to any one of claims 1 to 6, further comprising:
a step of displaying a screen for selecting a plurality of functions from among the functions of the selected devices.

8. The method according to any one of claims 1 to 7, further comprising:
a step of displaying a screen including an area for selecting the two or more devices from among the plurality of devices and an area for selecting a plurality of the functions.

9. The method according to any one of claims 1 to 8, wherein
the plurality of devices are registered to each group, wherein
the method further comprises a step of selecting the group, and
the two or more devices are selected from among the plurality of devices registered in the selected group.

10. A program for causing a collaboration control apparatus to execute:
a procedure of selecting two or more devices from among a plurality of devices; and
a procedure of giving an instruction to the selected devices to implement collaboration control relating to functions of the devices.

11. A collaboration control apparatus comprising:
a control unit, wherein
the control unit
selects two or more devices from among a plurality of devices; and
gives an instruction to the selected devices to implement collaboration control relating to functions of the devices.

12. A system comprising:
a collaboration control apparatus; and
a server, wherein
a control unit of the collaboration control apparatus
selects two or more devices from among a plurality of devices; and
gives an instruction to the selected devices to implement collaboration control relating to functions of the devices.
